# EUROPÄISCHE PATENTSCHRIFT

(11) **EP 3 199 433 B1**
(45) Veröffentlichungstag und Bekanntmachung des Hinweises auf die Patenterteilung: **25.12.2019**
(21) Anmeldenummer: 17152452.3
(22) Anmeldetag: 20.01.2017
(51) Int. Cl.: B62D 59/04, B60K 7/00, B60K 17/10

(54) **ANTRIEBSEINHEIT**
DRIVE UNIT
UNITÉ D'ENTRAÎNEMENT

(30) Priorität: 22.01.2016 DE 102016101087
(43) Veröffentlichungstag der Anmeldung: 02.08.2017
(73) Patentinhaber: SAF-HOLLAND GmbH, 63856 Bessenbach (DE)
(72) Erfinder: Wallmeier, Stefan, 63773 Goldbach (DE); Christ, Armin, 63856 Bessenbach (DE)
(74) Vertreter: Müller Schupfner & Partner Patent- und Rechtsanwaltspartnerschaft mbB

(56) Entgegenhaltungen:
- EP-A1- 0 003 888
- EP-A1- 0 249 806
- WO-A1-00/27662
- WO-A1-2009/023931
- DE-A1- 19 926 607
- DE-A1-102009 032 754
- US-A1- 2010 111 660
- US-A1- 2016 001 832

## Beschreibung

Die vorliegende Erfindung betrifft eine Antriebseinheit, insbesondere für Nutzfahrzeuge.

Insbesondere betrifft die vorliegende Erfindung eine Antriebsanheit zum temporären Antrieb eines ansonsten nicht angetriebenen Nutzfahrzeuges, wie beispielsweise eines Lkw-Anhängers. Die Antriebseinheit ist dabei insbesondere zum Einsatz mit am Nutzfahrzeug installierten Zusatzantrieben, wie beispielsweise Elektromotoren oder Hydraulikmotoren ausgelegt. Antriebseinheiten, welche die entsprechende Energie zum Antrieb weiterer Motoren aufbringen können, sind aus dem Stand der Technik bekannt. Dabei können beispielsweise hydrostatische Zusatzmotoren direkt an den Rädern eines Anhängers oder eines Nutzfahrzeuges angeordnet sein, um zusätzlich zum herkömmlichen Antrieb des Nutzfahrzeuges eine weitere Antriebskraft gezielt auf einzelne Räder einwirken zu lassen. Die aus dem Stand der Technik bekannten Zusatzantriebe werden dabei jeweils aus dem zentralen Bordnetz oder der Hydraulik des Zugfahrzeuges gespeist. Nachteilig hieran ist, dass, wenn das Nutzfahrzeug, insbesondere der Nutzfahrzeuganhänger, von seinem Zugfahrzeug getrennt ist und somit kein zentrales Versorgungsnetz für den Antrieb der Zusatzmotoren bereitsteht, ein Einsatz der Zusatzmotoren beispielsweise zum Rangieren des Nutzfahrzeuges nicht möglich war. Weiterhin sind Beispiele aus dem Stand der Technik bekannt, bei denen ein Zusatzmotor permanent am Nutzfahrzeug installiert ist und ggf. sogar in Eingriff mit den Rädern bleibt, wobei hierdurch zusätzliches Gewicht und an den Rädern auftretende Widerstände entstehen, welche den Betrieb des Nutzfahrzeuges ineffizient und kostenaufwendig machen.

Die WO 2000/27662 A1, die EP 0 003 888 A1, die DE 199 26 607 A1 und die US 2010/0111660 A1 offenbaren mobile Antriebsgeräte mit einem Motor und einem Generator, welche in einem gemeinsamen Gehäuse angeordnet sind, wobei der Generator jeweils ein elektrisches oder hydraulisches Potential erzeugt, welches über Ausgangsleitungen an einen Zusatzantrieb weitergeleitet wird.

Die US 2016/0001832 A1, die EP 0 249 806 A1, die WO 2009/023931 A1 und die DE 10 2009 032 754 A1 offenbaren weiteren Stand der Technik zu Antriebsaggregaten zum Antrieb von Zusatzantrieben in Fahrzeugen.

Aufgabe der vorliegenden Erfindung ist es, eine Antriebseinheit insbesondere für Nutzfahrzeuge bereitzustellen, welche die Versorgung von Zusatzantrieben eines Nutzfahrzeuges im Bedarfsfall zulässt und ansonsten ein geringes Gewicht und eine nur minimale Bauraumbeanspruchung am Nutzfahrzeug aufweist.

Diese Aufgabe wird gelöst mit einer Antriebseinheit gemäß Anspruch 1 und einem Nutzfahrzeug gemäß Anspruch 11.

Erfindungsgemäß umfasst die Antriebseinheit einen Motor und einen Generator, wobei der Motor die Energie eines Antriebsmediums in kinetische Energie wandelt und diese an den Generator überträgt, wobei der Generator kinetische Energie in ein Potential wandelt, wobei das Potential zwischen zumindest zwei Ausgangsleitungen des Generators herstellbar ist, wobei an den Ausgangsleitungen ein Zusatzantrieb für ein Nutzfahrzeug anschließbar ist, wobei der Motor und der Generator in einem Gehäuse angeordnet sind, welches ein Befestigungsmittel zur Festlegung an einem Nutzfahrzeug aufweist. Die Antriebseinheit ist vorzugsweise eine transportable Antriebseinheit, d. h. mit anderen Worten, dass sie unabhängig vom Nutzfahrzeug, an dem sie eingesetzt werden soll, gelagert und transportiert werden kann. Nur im Bedarfsfall, wenn an einem Nutzfahrzeug ein Zusatzantrieb mit der entsprechenden Antriebsenergie versorgt werden soll, kommt die Antriebseinheit zum Einsatz. Zum Zwecke der einfachen Transportierbarkeit ist die Antriebseinheit besonders kompakt ausgebildet, indem der Motor und der Generator sowie ggf. vorgesehene Tanks oder Batterien innerhalb eines Gehäuses angeordnet sind. Das Gehäuse muss dabei kein abgeschlossenes Gehäuse sein, sondern kann auch ein aus Streben gebildeter Rahmen sein, der zwar die einzelnen Bauteile der Antriebseinheit räumlich zueinander fixiert, jedoch keine umschlossene Hülle bildet. Insbesondere dann, wenn die Antriebseinheit auch bei schlechten Witterungsbedingungen eingesetzt werden können soll, ist es aber bevorzugt, dass das Gehäuse eine im Wesentlichen geschlossene Hülle um die entsprechenden Bauteile der Antriebseinheit bildet. Die Antriebseinheit ist insbesondere bevorzugt speziell dafür ausgebildet, mit einem Zusatzantrieb für ein Nutzfahrzeug gekoppelt zu werden. Dieser Zusatzantrieb ist vorzugsweise ein Elektromotor oder ein hydrostatischer Antrieb, wobei die Antriebseinheit die entsprechende Antriebsenergie für den Zusatzantrieb liefert. Besonders bevorzugt weist die Antriebseinheit ein Befestigungsmittel auf, welches insbesondere zur schnellen und einfachen Montage und Demontage der Antriebseinheit am Nutzfahrzeug ausgebildet ist. Hierfür sind insbesondere bevorzugt Bajonett- oder Schnappverschlüsse sowie Twist-Lock-Verschlüsse geeignet. Besonderes Merkmal des Befestigungsmittels ist, dass es möglichst mit nur einem oder zwei Handgriffen in eine geschlossene Stellung und in eine geöffnete Stellung bringbar ist, so dass die Antriebseinheit besonders schnell und besonders einfach und ohne größeren Montageaufwand an einem Nutzfahrzeug festlegbar ist und auch wieder von diesem demontierbar ist. Insbesondere bevorzugt beruht das Befestigungsmittel dabei auf einem formschlüssigen Eingriff mit einer entsprechenden Eingriffsgeometrie am Nutzfahrzeug. Mit anderen Worten ist also eine stoffschlüssige Verbindung zur Festlegung der Antriebseinheit am Nutzfahrzeug nicht erwünscht. Weiterhin bevorzugt weist die Antriebseinheit bzw. vorzugsweise das Gehäuse der Antriebseinheit ein Eingriffsmittel für den Eingriff beispielsweise eines Kranhakens auf. Dies ist insbesondere dann bevorzugt, wenn die Antriebseinheit an einem Nutzfahrzeug verwendet werden soll, welches sich in einer Baustelle befindet, bei der zu wenig Platz für ein Zugfahrzeug ist, wobei die an dem Nutzfahrzeug installierte Antriebseinheit besonders bevorzugt die Antriebsenergie für einen Zusatzantrieb des Nutzfahrzeuges bereitstellt. Auf diese Weise kann mit Vorteil das Nutzfahrzeug auf der Baustelle auch ohne Ankoppelung an ein Zugfahrzeug, wie beispielsweise eine Zugmaschine rangiert werden.

Bevorzugt ist das Befestigungsmittel zur lösbaren Festlegung des Gehäuses an dem Nutzfahrzeug ausgelegt. Besonders bevorzugt ist es dabei, dass der Zustand, in dem das Befestigungsmittel das Gehäuse der Antriebseinheit an dem Nutzfahrzeug, vorzugsweise an dem Rahmen oder einem Fahrwerksteil des Nutzfahrzeuges, festlegt, durch einen Formschluss zwischen dem Befestigungsmittel und einer entsprechenden Eingriffsgeometrie am Nutzfahrzeug gekennzeichnet. Dieser Formschluss ist vorzugsweise durch einen Anwender mit wenigen Handgriffen herstellbar und wieder lösbar. Dabei soll insbesondere vermieden werden, dass beispielsweise eine kraftschlüssige Verbindung nur unter Zuhilfenahme eines Werkzeugs herstellbar ist. Vielmehr wird vorzugsweise ein Twist-Lock als Befestigungsmittel eingesetzt, welcher die erforderliche Befestigungssicherheit für Gerätschaften an einem Nutzfahrzeug gewährleistet und gleichzeitig auf einfache Weise durch einen Anwender in eine gesicherte und von der gesicherten in die ungesicherte Position bringbar ist. Der Twist-Lock beruht mit Vorteil auf dem Prinzip, das Befestigungsmittel durch Drehen um einen Winkel von maximal 180°, besonders bevorzugt 90° in einen Formschluss mit einer korrespondierenden Geometrie des Nutzfahrzeuges zu bringen. Vorzugsweise können dabei Federelemente vorgesehen sein, welche das Befestigungsmittel in seiner Position halten, in der es formschlüssig mit dem Nutzfahrzeug in Eingriff steht. Durch Überwinden der Federkraft kann das Befestigungsmittel dabei vorzugsweise entriegelt werden, wobei die Antriebseinheit auf einfache Weise von dem Nutzfahrzeug demontiert werden kann.

Weiterhin bevorzugt ist das Befestigungsmittel als Schnellverriegelung ausgebildet oder zum Eingriff mit einer Schnellverriegelung ausgebildet. Schnellverriegelungen zeichnen sich dadurch aus, dass der Anwender insbesondere durch maximal zwei Bewegungsabläufe das Befestigungsmittel verriegeln und entriegeln kann. Ein besonders bevorzugtes Beispiel für eine Schnellverriegelung ist ein Bajonettverschluss. Alternativ hierzu und insbesondere wenn die Antriebseinheit ein Gewicht aufweist, welches höher ist als die Tragkraft eines Menschen, ist vorzugsweise ein Twist-Lock vorgesehen, um entsprechend eine ausreichende Befestigungskraft zur Festlegung des Gehäuses der Antriebseinheit an dem Nutzfahrzeug bereitzustellen. Es versteht sich, dass je nach Beschaffenheit und Geometrie des Nutzfahrzeuges sowie der Antriebseinheit auch eine Vielzahl von Befestigungsmitteln an dem Gehäuse vorgesehen sein kann.

Vorzugsweise lässt das Befestigungsmittel in einer ersten Stellung das Zusammen- und Auseinanderführen des Gehäuses und des Nutzfahrzeuges zu, wobei das Befestigungsmittel in einer zweiten Stellung das Gehäuse formschlüssig am Nutzfahrzeug sichert, wobei ein Sicherungsabschnitt das Befestigungsmittel in seiner zweiten Position formschlüssig sichert. Mit anderen Worten ist das Befestigungsmittel in der ersten Stellung somit in der offenen Stellung, d.h. dass die Antriebseinheit an das Nutzfahrzeug herangeführt und an diesem festgelegt werden kann oder vom Nutzfahrzeug demontiert werden kann. Insbesondere bevorzugt durch Verdrehen oder Verschieben eines entsprechenden Verriegelungselements des Befestigungsmittels ist das Befestigungsmittel in seine zweite Position bringbar, in der es das Gehäuse der Antriebseinheit formschlüssig am Nutzfahrzeug sichert. Hierbei ist insbesondere eine Hinterschneidung vorgesehen, welche mit einem entsprechenden Eingriffsabschnitt am Nutzfahrzeug in Eingriff bringbar ist und Verlagerungen des Gehäuses der Antriebseinheit relativ zum Nutzfahrzeug verhindert. Weiterhin bevorzugt ist ein Sicherungsabschnitt vorgesehen, der das Befestigungsmittel in dessen zweiter Stellung sichert. Der Sicherungsabschnitt kann vorzugsweise als Flanke oder als entsprechende, einen Vorsprung aufweisende Geometrie ausgebildet sein, welche ein Verdrehen oder Verlagern des Befestigungsmittels in der zweiten Stellung verhindert. Durch den Einsatz eines doppelt gesicherten Befestigungsmittels kann dabei insbesondere die Antriebseinheit auch während des gesamten Einsatzzyklus eines Nutzfahrzeuges an diesem festgelegt bleiben. Bevorzugt kann die Antriebseinheit somit auch bei Fahrten zwischen verschiedenen Einsatzorten an dem Nutzfahrzeug installiert sein.

In einer besonders bevorzugten Ausführungsform ist das Antriebsmedium elektrischer Strom, welcher von einer Batterie bereitgestellt wird, wobei die Batterie innerhalb des Gehäuses angeordnet ist. Für eine besonders kompakte Bauweise der Antriebseinheit ist vorzugsweise eine Batterie neben dem Motor und dem Generator innerhalb des Gehäuses der Antriebseinheit angeordnet. Dabei kann die Batterie auch mehrteilig ausgebildet sein, um den Platz innerhalb des vorzugsweise quaderförmig ausgebildeten Gehäuses besonders gut ausnutzen zu können und verbleibende Resträume zwischen dem Motor und dem Generator besonders günstig auszunutzen. Weiterhin ist es bevorzugt, dass die Batterie über einfache Montage und elektrische Anschlussmittel leicht ausgetauscht werden kann, um die Antriebseinheit bei rascher Folge von Einsätzen hintereinander jeweils mit neuen Batterien bestücken zu können.

Alternativ hierzu ist das Antriebsmedium vorzugsweise ein fossiler Brennstoff, wobei ein Tank zur Lagerung des Antriebsmediums innerhalb des Gehäuses angeordnet ist. Der Vorteil eines fossilen Brennstoffs ist, dass die mögliche zu speichernde Energiemenge höher ist als bei einem herkömmlichen elektrischen Energiespeicher. Mit Vorteil ist der Tank innerhalb des Gehäuses angeordnet, um eine besonders kompakte Bauweise der Antriebseinheit zu erreichen. Als fossile Brennstoffe kommen vorzugsweise Benzin, Diesel oder ein Erdgas bzw. Flüssiggas zum Einsatz.

In einer bevorzugten Ausführungsform ist das Potential ein Druckunterschied in einem Arbeitsfluid, wobei die Ausgangsleitungen mit einem Adapter zur Festlegung von Hydraulik oder Druckluftleitungen ausgestattet sind. Besonders bevorzugt ist der Generator somit eine Pumpe, die ein Druckfluid bzw. Arbeitsfluid derart mit einem Druckunterschied beaufschlagen kann, dass ein über Hydraulik oder Druckluftleitungen angeschlossener Zusatzantrieb diese entsprechende Druckenergie wiederum in kinetische Energie zum Antrieb eines Fahrzeugrades eines Nutzfahrzeuges wanden kann. Besonders bevorzugt sind die Ausgangsleitungen dabei derart ausgebildet, dass sie mit den Standard-Hydraulikleitungen, welche an einem Nutzfahrzeuganhänger vorgesehen sind und während dieser mit dem Zugfahrzeug verbunden ist, mit dem Hydrauliksystem des Zugfahrzeuges verbunden sind, in Eingriff bringbar ist, so dass die Antriebseinheit das Hydrauliksystem eines Zugfahrzeuges gewissermaßen ersetzt. Auf diese Weise müssen an der Antriebseinheit keine weiteren längeren Ausgangsleitungen vorgesehen sein und es kann sowohl Bauraum, als auch Gewicht an der Antriebseinheit gespart werden. Besonders bevorzugt nutzt die Antriebseinheit in diesem Fall auch das bereits im Nutzfahrzeug befindliche Hydraulikfluid, wodurch sich der an der Antriebseinheit erforderliche Hydraulikfluidspeicher oder Druckluftspeicher besonders klein dimensionieren lässt und wiederum Bauraum und Gewicht gespart werden kann. Auf diese Weise kann die Antriebseinheit als besonders gut transportable und besonders einfach an verschiedenen Nutzfahrzeugen zum Einsatz bringbare Antriebseinheit ausgelegt sein.

In einer alternativen Ausführungsform ist das Potential, welches vom Generator erzeugt wird, eine elektrische Spannung, die zur Bereitstellung eines elektrischen Stromes in dem Zusatzantrieb eingesetzt werden kann. Diese Ausführungsform eignet sich insbesondere dann, wenn an dem Nutzfahrzeug, insbesondere an dem Nutzfahrzeuganhänger kein Hydrauliksystem vorhanden ist und ein Zusatzantrieb als elektrischer Motor ausgebildet ist, welcher über eine von außen und nachträglich anbringbare Verkabelung mit der entsprechenden elektrischen Energie versorgt wird.

Erfindungsgemäß sind vier Ausgangsleitungen vorgesehen, wobei der Generator das Potential zwischen je zwei Ausgangsleitungen erzeugt, wobei ein erstes Paar von Ausgangsleitungen mit einem ersten Zusatzantrieb an einem Nutzfahrzeug in Verbindung steht und wobei ein zweites Paar von Ausgangsleitungen mit einem zweiten Zusatzantrieb an einem Nutzfahrzeug in Verbindung steht, insbesondere bevorzugt dann, wenn zwei Räder des Nutzfahrzeuges mit zwei separat voneinander angeordneten Zusatzantrieben durch den Generator mit der entsprechenden Antriebsenergie versorgt werden sollen, ist es bevorzugt, dass am Generator bereits zwei Paare von Ausgangsleitungen vorgesehen sind. Mit anderen Worten ist dabei vorzugsweise eine parallel geschaltete Anordnung der Ausgangsleitungen am Generator vorgesehen. Mit Vorteil lassen sich somit die einzelnen Zusatzantriebe vom Generator separat ansteuern und es können insbesondere bevorzugt Lenkbewegungen am Nutzfahrzeug allein durch gezielte Betätigung der beiden Zusatzantriebe erreicht werden, ohne dass eine manuelle Betätigung des Nutzfahrzeuges durch den Anwender erforderlich ist. Dies ist insbesondere bei großen Nutzfahrzeuganhängern von Vorteil, deren Gewicht zu hoch für eine manuelle Handhabe durch einen Anwender ist.

Erfindungsgemäß ist eine Steuereinheit vorgesehen, die das erste und das zweite Paar von Ausgangsleitungen jeweils gezielt mit einem Potential beaufschlagt, um das Nutzfahrzeug über die Zusatzantriebe zu rangieren. Die Steuereinheit kann dabei vorzugsweise eine Ventilanordnung umfassen, über welche zwischen einem der vorzugsweise zwei vorgesehenen Paare von Ausgangleitungen jeweils ein bestimmter Druckunterschied einstellbar ist. Indem der Druckunterschied an einem der beiden Paare höher gehalten ist, als an dem jeweils anderen Paar von Ausgangsleitungen, wird der mit dem ersten Paar verbundene Zusatzantrieb eine höhere Antriebsleistung aufbringen, als der jeweils andere Zusatzantrieb, wodurch beispielsweise eine Kurvenfahrt des Nutzfahrzeuges eingeleitet werden kann.

Besonders bevorzugt weist die Steuereinheit eine Fernbedienung auf, welche das Rangieren des Nutzfahrzeuges mit einem entsprechenden Sicherheitsabstand erlaubt. Die Fernbedienung kann dabei sowohl Funkfernbedienung oder über ein Kabel mit der Steuereinheit verbundene Fernbedienung sein. Insbesondere im Baustellenbereich und beim Umgang von mit Gefahrgütern beladenen Nutzfahrzeugen oder Nutzfahrzeuganhängern ist es erforderlich, dass der Anwender der Antriebseinheit mit entsprechendem Sicherheitsabstand von dem Nutzfahrzeug und der Antriebseinheit hantieren kann. Weiterhin erlaubt die Fernbedienung auch, dass der Anwender sich an eine bestimmte Seite des Nutzfahrzeuges stellt, um die von ihm verursachte Verlagerung des Nutzfahrzeuges aus bevorzugten Perspektiven beurteilen zu können und eine Kollision des Nutzfahrzeuges mit anderen Fahrzeugen oder Gegenständen zu vermeiden.

Besonders bevorzugt ist eine fünfte Ausgangsleitung zum Sammeln von Leckage-Fluid vorgesehen. Bei der bevorzugten Ausführungsform der Zusatzantriebe als hydrostatische oder hydraulische Motoren ist es bevorzugt, dass eine fünfte Leitung zum Auffangen von Leckage-Fluid und Rückführen dieses Fluids in den Fluidkreislauf des Generators vorhanden ist. Besonders bevorzugt sind dabei sämtliche Leitungen parallel zueinander in einem einzigen Leitungsstrang gebündelt, um wiederum eine kompakte Bauweise der Antriebseinheit und der an die Antriebseinheit angrenzenden Leitungen zu gewährleisten.

In einer besonders bevorzugten Ausführungsform weist das Gehäuse eine Vielzahl von Befestigungsmitteln auf, welche an verschiedenen Seiten des Gehäuses angeordnet sind. Indem am Gehäuse eine Vielzahl von Befestigungsmitteln vorgesehen ist, kann die Antriebseinheit an verschiedenen Nutzfahrzeugen oder in verschiedenen Positionen am Nutzfahrzeug festgelegt werden, wobei die Lage des Nutzfahrzeuges im Raum optimiert werden kann. Insbesondere wenn der Generator als Hydraulikpumpe ausgebildet ist, kann eine bevorzugt horizontale Ausrichtung der Antriebseinheit durch Anordnen des Gehäuses mit einem entsprechenden Befestigungsmittel an dem Nutzfahrzeug eingestellt werden. Weiterhin bevorzugt können auch mehrere Befestigungsmittel gleichzeitig mit entsprechenden Eingriffsabschnitten am Nutzfahrzeug in Eingriff gebracht werden, um eine besonders sichere Festlegung der Antriebseinheit an dem Nutzfahrzeug zu ermöglichen. In einer weiterhin bevorzugten Ausführungsform ist ein Adapterelement vorgesehen, welches ein erstes Befestigungsmittel aufweist, welches am Nutzfahrzeug festlegbar ist und welches eine Winkelverschwenkung in einem bestimmten Bereich zulässt, um die Lage der Antriebseinheit im Raum zu optimieren.

Insbesondere bevorzugt ist der Generator speziell für den Einsatz mit einem Zusatzantrieb für Nutzfahrzeuge ausgebildet. Dabei weist der Generator insbesondere eine Charakteristik auf, welche für verschiedene Leistungsbereiche des Zusatzantriebs wirkungsgradoptimiertes Potential bereitstellt, um den Energieverbrauch der Antriebseinheit zu minimieren und gleichzeitig die Lebensdauer der entsprechend beteiligten Bauteile am Zusatzantrieb sowie am Generator zu erhöhen. Insbesondere bevorzugt ist es hierbei, dass der Generator ausgelegt ist, einen für hydraulische Zusatzmotoren geeigneten Druckanstieg, für die Beschleunigung des Zusatzantriebes erforderliche Druckimpulse und gleichbleibende Drücke für verschiedene Betriebszustände des Zusatzantriebs bereitzustellen. Weiterhin weist der Generator vorzugsweise eine Anschlussmöglichkeit zum Anschluss an die Benzin- oder Dieselversorgung des Zugfahrzeuges auf, was einen eigenen Tank am Generator überflüssig macht und Gewicht spart.

Erfindungsgemäß ist weiterhin ein Nutzfahrzeug vorgesehen, welches eine Antriebseinheit und einen Zusatzantrieb umfasst, wobei der Zusatzantrieb unmittelbar an einem Rad eines Nutzfahrzeuges festgelegt und ausgelegt ist, ein Drehmoment auf das Rad zu übertragen, wobei das Nutzfahrzeug einen Befestigungsabschnitt aufweist, in welchem ein Befestigungsmittel der Antriebseinheit in Eingriff bringbar ist, um die Antriebseinheit an dem Nutzfahrzeug festzulegen, wobei die Antriebseinheit zwei Ausgangsleitungen aufweist zwischen denen ein Potential zum Antrieb des Zusatzantriebs herstellbar ist. Vorzugsweise weist die Antriebseinheit dabei eines oder eine Vielzahl der vorherbeschriebenen Merkmale auf. Das Nutzfahrzeug ist bevorzugt ein Fahrzeuganhänger, welcher standardmäßig keinen eigenen Antrieb aufweist, sondern nur über einen Zusatzantrieb, welcher an einem Rad des Nutzfahrzeuges angreift, auf kürzeren Strecken bewegt werden kann. Der Zusatzantrieb greift dabei vorzugsweise nur an jeweils einem Rad des Nutzfahrzeuges an. Sollen mehrere Räder des Nutzfahrzeuges angetrieben werden, so sind vorzugsweise mehrere Zusatzantriebe im Einsatz. Besonders bewährt haben sich Nutzfahrzeuge, welche über zwei durch Zusatzantriebe angetriebene Räder verfügen. Auf diese Weise kann mit gezielter Steuerung der Zusatzantriebe das Nutzfahrzeug beispielsweise auf einer nur schwer zu erreichenden Baustelle, bei welcher es von seinem Zugfahrzeug abgekoppelt werden muss, rangiert werden. Weiterhin weist das Nutzfahrzeug einen Befestigungsabschnitt auf, in welchem ein Befestigungsmittel der Antriebseinheit in Eingriff bringbar ist. Der Eingriffsabschnitt des Nutzfahrzeuges kann vorzugsweise als Twist-Lock ausgebildet sein, welcher mit einem als Aussparung oder Bohrung ausgeführten Eingriffsmittel an der Antriebseinheit ein Eingriff bringbar ist. Alternativ hierzu kann ein Schienensystem mit entsprechenden Vorsprüngen vorgesehen sein, in welche korrespondierend ein oder eine Vielzahl von Eingriffsmitteln eines Gehäuses der Antriebseinheit eingreifen und die Antriebseinheit so formschlüssig am Nutzfahrzeug festlegen.

Vorzugsweise ist ein Leitungssystem zur Übertragung eines von der Antriebseinheit erzeugten Potentials an dem Zusatzantrieb vorgesehen, wobei das Leitungssystem vorzugsweise am Nutzfahrzeug festgelegt ist. Bevorzugt weist das Nutzfahrzeug bereits ein Leitungssystem auf, welches an einem Ende zum Anschluss der Antriebseinheit und an einem zweiten Ende zum Anschluss an dem einen oder der Vielzahl von Zusatzantrieben ausgelegt ist.

Bevorzugterweise kann die Kopplung zwischen dem Leitungssystems und der Antriebseinheit mit Hilfe einer Adaptereinheit erfolgen. Die Adaptereinheit kann sich sowohl innerhalb der Antriebseinheit, an den Außenflächen als auch außerhalb der Antriebseinheit befinden. Die Adaptereinheit ist in einer bevorzugten Ausführungsform mit mindestens zwei Schnellkupplungen ausgeführt, um eine Verbindung zwischen dem Zusatzantrieb und der Antriebseinheit schnell herstellen oder lösen zu können, um somit das Potential zwischen dem Generator und dem Zusatzantrieb zu übertragen. Die Schnellkupplungen sind als Elemente ausgeführt, welche sich durch einen Handgriff miteinander verbinden bzw. lösen lassen und so stabil sind, dass die Drücke innerhalb des Leitungssystem nicht verloren gehen oder die Schnellkupplung beschädigt wird. In einer bevorzugten Ausführungsform handelt es sich dabei um eine Steckkupplung gemäß ISO 8434-1 (DIN 2353). Bevorzugterweise kann die Adaptereinheit am Gehäuse der Antriebseinheit festgelegt sein, um so einen einfachen Zugang und eine einfache Handhabung zu gewährleisten.

In einer weiteren Ausführungsform kann für ein einfaches Rangieren an Orten mit mehreren Nutzfahrzeugen über die Adaptereinheit eine verlängerte Leitung des Systems angeschlossen werden. Somit verbleibt die Antriebseinheit an einer Stelle, jedoch können auch Nutzfahrzeuge bewegt werden, welche sich im direkten Umfeld des Nutzfahrzeuges befinden. Besonders bei eng aneinander geparkten Nutzfahrzeugen kann dies enorme Zeitersparnis mit sich bringen.

Weitere Vorteile und Merkmale der vorliegenden Erfindung ergeben sich aus der nachfolgenden Beschreibung mit Bezug auf die beigefügte Figur.

Es zeigt:

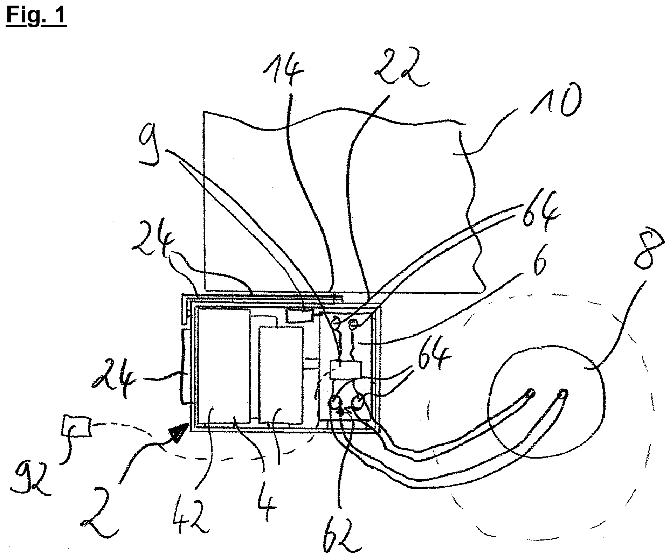

- Fig. 1: eine schematische Ansicht einer bevorzugten Ausführungsform einer erfindungsgemäßen Antriebseinheit.

In Fig. 1 ist ein Nutzfahrzeug 10 schematisch dargestellt, an welchem ein Befestigungsabschnitt 14 an der Unterseite des Rahmens des Nutzfahrzeuges gezeigt ist. An diesem Befestigungsabschnitt 14 ist die Wandlereinheit 2 über ihr Befestigungsmittel 24 an dem Rahmen des Nutzfahrzeuges 10 festlegbar. Die Wandlereinheit 2 weist einen Rahmen 22 auf, innerhalb dem sich ein Motor 4 und ein Generator 6 befindet. Darüber hinaus weist die Antriebseinheit 2 vorzugsweise ein Antriebsmedium 42 auf, welches in einen speziell dafür vorgesehenen Behälter oder Tank vorgesehen ist. Der Generator 6 wandelt vom Motor 4 übermittelte kinetische Energie in ein Potential 62, welches er zwischen zwei Ausgangsleitungen 64 etabliert. Die Ausgangsleitungen 64 sind insbesondere dafür vorgesehen, mit einem Zusatzantrieb 8 gekoppelt zu werden, wobei über die an den Ausgansleitungen 64 angeschlossenen Verbindungsleitungen das Potential 62 an den Zusatzantrieb 8 übertragen wird. Der Zusatzantrieb 8 ist insbesondere bevorzugt an einem Rad des Nutzfahrzeuges festgelegt und versetzt dieses in Rotation. Darüber hinaus bevorzugt weist der Generator 6 eine Steuereinheit 9 auf, welche dazu ausgelegt ist, ein bestimmtes Potential 62 zwischen jeweils einem Paar von Ausgangsleitungen 64 zu etablieren, wobei insbesondere bei Vorhandensein mehrerer Ausgangsleitungen 64 die Steuereinheit gezielt nur einzelne dieser Ausgangsleitungen ansteuern kann. Besonders bevorzugt weist die Steuereinheit 9 eine Fernbedienung 92 auf, über welche ein Anwender die Steuereinheit 9 aus sicherer Entfernung bedienen kann. Auf diese Weise kann ein Anwender mit ausreichendem Abstand zum Nutzfahrzeug 10 und mit Blick auf eventuell kritische Rangierpunkte auf einer Baustelle das Nutzfahrzeug 10 mittels der Fernbedienung 92 rangieren. In der vorliegenden Figur ist nur eines von vorzugsweise mehreren Fahrzeugrädern dargestellt, wobei auch nur ein Zusatzantrieb 8 und die dazugehörigen Anschlussleitungen zu den Ausgangsleitungen 64 dargestellt sind. Es versteht sich, dass vorzugsweise zumindest zwei Paar von Ausgangsleitungen 64 am Generator 6 vorgesehen sind, um besonders bevorzugt zwei Zusatzantriebe 8 ansteuern zu können, um ein Lenken des Nutzfahrzeuges über die Zusatzantriebe 8 erreichen zu können.

### Bezugszeichen:

- 2: - Wandlereinheit
- 4: - Motor
- 6: - Generator
- 8: - Zusatzantrieb
- 9: - Steuereinheit
- 10: - Nutzfahrzeug
- 14: - Befestigungsabschnitt
- 22: - Gehäuse
- 24: - Befestigungsmittel
- 42: - Antriebsmedium
- 62: - Potential
- 64: - Ausgangsleitung
- 92: - Fernbedienung

## Patentansprüche

1. Antriebseinheit (2), insbesondere für Nutzfahrzeuge, umfassend einen Motor (4) und einen Generator (6),
wobei der Motor (4) die Energie eines Antriebsmediums (42) in kinetische Energie wandelt und diese an den Generator (6) überträgt,
wobei der Generator (6) kinetische Energie in ein Potential (62) wandelt, wobei das Potential (62) zwischen zumindest zwei Ausgangsleitungen (64) des Generators (6) herstellbar ist,
wobei an den Ausgangsleitungen (64) ein Zusatzantrieb (8) für ein Nutzfahrzeug anschließbar ist,
wobei der Motor (4) und der Generator (6) in einem Gehäuse (22) angeordnet sind, welches ein Befestigungsmittel (24) zur Festlegung an einem Nutzfahrzeug (10) aufweist,
**dadurch gekennzeichnet, dass** vier Ausgangsleitungen (64) vorgesehen sind,
wobei der Generator (6) das Potential (62) zwischen je zwei Ausgangsleitungen (64) erzeugt,
wobei ein erstes Paar von Ausgangsleitungen (64) mit einem ersten Zusatzantrieb (8) an einem Nutzfahrzeug in Verbindung steht, und
wobei ein zweites Paar von Ausgangsleitungen (64) mit einem zweiten Zusatzantrieb (8) an einem Nutzfahrzeug in Verbindung steht, und
dass der Generator (6) eine Steuereinheit (9) aufweist, die das erste und das zweite Paar von Ausgangsleitungen (64) jeweils gezielt mit einem Potential (62) beaufschlagt, um das Nutzfahrzeug über die Zusatzantriebe (8) zu rangieren.

2. Antriebseinheit (2) nach Anspruch 1,
wobei das Befestigungsmittel (24) zur lösbaren Festlegung des Gehäuses (22) an dem Nutzfahrzeug (10) ausgelegt ist.

3. Antriebseinheit (2) nach einem der vorhergehenden Ansprüche,
wobei das Befestigungsmittel (24) als Schnellverriegelung ausgebildet ist, oder zum Eingriff mit einer Schnellverriegelung ausgebildet ist.

4. Antriebseinheit (2) nach einem der vorhergehenden Ansprüche,
wobei das Befestigungsmittel (24) in einer ersten Stellung das Zusammen- und Auseinanderführen des Gehäuses (22) und des Nutzfahrzeuges (10) zulässt, wobei das Befestigungsmittel (24) in einer zweiten Stellung das Gehäuse (22) formschlüssig am Nutzfahrzeug (10) sichert,
wobei ein Sicherungsabschnitt das Befestigungsmittel (24) in seiner zweiten Stellung formschlüssig sichert.

5. Antriebseinheit (2) nach einem der vorhergehenden Ansprüche,
wobei das Antriebsmedium (42) elektrischer Strom ist, welcher von einer Batterie bereit gestellt ist,
wobei die Batterie innerhalb des Gehäuses (22) angeordnet ist.

6. Antriebseinheit (2) nach einem der Ansprüche 1 bis 4,
wobei das Antriebsmedium (42) ein fossiler Brennstoff ist,
wobei ein Tank zur Lagerung des Antriebsmediums (42) innerhalb des Gehäuses (22) angeordnet ist.

7. Antriebseinheit (2) nach einem der vorhergehenden Ansprüche,
wobei das Potential (62) ein Druckunterschied in einem Arbeitsfluid ist,
wobei die Ausgangsleitungen (64) mit einem Adapter zur Festlegung von Hydraulikleitungen oder Druckluftleitungen ausgestattet sind.

8. Antriebseinheit (2) nach einem der vorhergehenden Ansprüche,
wobei die Steuereinheit (9) eine Fernbedienung (92) aufweist, welche das Rangieren des Nutzfahrzeuges mit Sicherheitsabstand erlaubt.

9. Antriebseinheit (2) nach einem der vorhergehenden Ansprüche,
wobei eine fünfte Ausgangsleitung (64) zum Sammeln von Leckage-Fluid vorgesehen ist.

10. Antriebseinheit (2) nach einem der vorhergehenden Ansprüche,
wobei das Gehäuse (22) eine Vielzahl von Befestigungsmitteln (24) aufweist, welche an verschiedenen Seiten des Gehäuses angeordnet sind.

11. Nutzfahrzeug (10), umfassend eine Antriebseinheit (2) und zwei Zusatzantriebe (8) nach einem der Ansprüche 1 bis 10,
wobei jeder der Zusatzantriebe (8) unmittelbar an einem Rad des Nutzfahrzeuges (10) festgelegt ist und ausgelegt ist, ein Drehmoment auf das Rad zu übertragen,
wobei das Nutzfahrzeug einen Befestigungsabschnitt (14) aufweist, in welchem ein Befestigungsmittel (24) der Antriebseinheit (2) in Eingriff bringbar ist, um die Antriebseinheit (2) an dem Nutzfahrzeug (10) festzulegen.

12. Nutzfahrzeug (10) nach Anspruch 11,
wobei ein Leitungssystem zur Übertragung eines von der Antriebseinheit (2) erzeugten Potentials an den Zusatzantrieb (8) vorgesehen ist,
wobei das Leitungssystem vorzugsweise am Nutzfahrzeug (10) festgelegt ist.

## Claims

1. Drive unit (2), in particular for utility vehicles, comprising a motor (4) and a generator (6),
wherein the motor (4) converts the energy of a driving medium (42) into kinetic energy and transmits the latter to the generator (6),
wherein the generator (6) converts kinetic energy into a potential (62),
wherein the potential (62) can be produced between at least two output lines (64) of the generator (6), wherein an additional drive (8) for a utility vehicle can be connected to the output lines (64), wherein the motor (4) and the generator (6) are arranged in a housing (22) which has a fastening means (24) for fixing to a utility vehicle (10),
**characterized in that**
four output lines (64) are provided,
wherein the generator (6) generates the potential (62) between every two output lines (64),
wherein a first pair of output lines (64) is connected to a first additional drive (8) on a utility vehicle, and
wherein a second pair of output lines (64) is connected to a second additional drive (8) on a utility vehicle, and
**in that** the generator (6) has a control unit (9) which in each case specifically subjects the first and the second pair of output lines (64) to a potential (62) in order to manoeuvre the utility vehicle via the additional drives (8).

2. Drive unit (2) according to Claim 1,
wherein the fastening means (24) is configured for releasably fixing the housing (22) to the utility vehicle (10).

3. Drive unit (2) according to either of the preceding claims,
wherein the fastening means (24) is designed as a rapid-action lock, or is designed for engagement with a rapid-action lock.

4. Drive unit (2) according to one of the preceding claims,
wherein the fastening means (24) in a first position permits the housing (22) and the utility vehicle (10) to be brought together and moved apart, wherein the fastening means (24) in a second position secures the housing (22) to the utility vehicle (10) in a form-fitting manner,
wherein a securing section secures the fastening means (24) in a form-fitting manner in its second position.

5. Drive unit (2) according to one of the preceding claims,
wherein the driving medium (42) is electrical current which is provided by a battery,
wherein the battery is arranged within the housing (22) .

6. Drive unit (2) according to one of Claims 1 to 4,
wherein the driving medium (42) is a fossil fuel,
wherein a tank for storing the driving medium (42) is arranged within the housing (22).

7. Drive unit (2) according to one of the preceding claims,
wherein the potential (62) is a pressure difference in a working fluid,
wherein the output lines (64) are provided with an adapter for the fixing of hydraulic lines or compressed air lines.

8. Drive unit (2) according to one of the preceding claims,
wherein the control unit (9) has a remote control (92) which permits the manoeuvring of the utility vehicle at a safe distance.

9. Drive unit (2) according to one of the preceding claims,
wherein a fifth output line (64) is provided for collecting leakage fluid.

10. Drive unit (2) according to one of the preceding claims,
wherein the housing (22) has a multiplicity of fastening means (24) which are arranged on different sides of the housing.

11. Utility vehicle (10) comprising a drive unit (2) and two additional drives (8) according to one of Claims 1 to 10,
wherein each of the additional drives (8) is fixed directly to a wheel of the utility vehicle (10) and is configured to transmit a torque to the wheel, wherein the utility vehicle has a fastening section (14) in which a fastening means (24) of the drive unit (2) can be brought into engagement in order to fix the drive unit (2) to the utility vehicle (10).

12. Utility vehicle (10) according to Claim 11,
wherein a line system is provided for transmitting a potential generated by the drive unit (2) to the additional drive (8),
wherein the line system is preferably fixed to the utility vehicle (10).

## Revendications

1. Unité d'entraînement (2), en particulier pour véhicules utilitaires, comprenant un moteur (4) et un générateur (6),
dans laquelle
le moteur (4) convertit l'énergie d'un milieu d'entraînement (42) en énergie cinétique et la transmet au générateur (6),
le générateur (6) convertit l'énergie cinétique en un potentiel (62),
le potentiel (62) peut être généré entre au moins deux lignes de sortie (64) du générateur (6),
un entraînement auxiliaire (8) pour un véhicule utilitaire peut être raccordé aux lignes de sortie (64),
le moteur (4) et le générateur (6) sont disposés dans un boîtier (22) qui comporte un moyen de fixation (24) destiné pour l'immobilisation sur un véhicule utilitaire (10),
**caractérisée en ce que**
il est prévu quatre lignes de sortie (64),
le générateur (6) génère le potentiel (62) entre deux lignes de sortie (64) respectives,
une première paire de lignes de sortie (64) est connectée à un premier entraînement auxiliaire (8) sur un véhicule utilitaire, et
une deuxième paire de lignes de sortie (64) est connectée à un deuxième entraînement auxiliaire (8) sur un véhicule utilitaire, et
le générateur (6) comprend une unité de commande (9) qui applique de façon ciblée un potentiel respectif (62) à la première et à la deuxième paire de lignes de sortie (64) afin de manœuvrer le véhicule utilitaire via les entraînements auxiliaires (8).

2. Unité d'entraînement (2) selon la revendication 1,
dans laquelle
le moyen de fixation (24) est conçu pour l'immobilisation amovible du boîtier (22) sur le véhicule utilitaire (10).

3. Unité d'entraînement (2) selon l'une des revendications précédentes, dans laquelle
le moyen de fixation (24) est réalisé sous forme de verrouillage rapide ou est réalisé pour l'engagement avec un verrouillage rapide.

4. Unité d'entraînement (2) selon l'une des revendications précédentes, dans laquelle
le moyen de fixation (24) permet, dans une première position, le rapprochement et l'éloignement du boîtier (22) et du véhicule utilitaire (10),
le moyen de fixation (24) bloque, dans une seconde position, le boîtier (22) par coopération de forme sur le véhicule utilitaire (10), et
une portion de blocage bloque le moyen de fixation (24) par coopération de forme dans sa seconde position.

5. Unité d'entraînement (2) selon l'une des revendications précédentes, dans laquelle
le milieu d'entraînement (42) est un courant électrique fourni par une batterie, et
la batterie est disposée à l'intérieur du boîtier (22).

6. Unité d'entraînement (2) selon l'une des revendications 1 à 4,
dans laquelle
le milieu d'entraînement (42) est un combustible fossile, et
un réservoir pour stocker le milieu d'entraînement (42) est disposé à l'intérieur du boîtier (22).

7. Unité d'entraînement (2) selon l'une des revendications précédentes, dans laquelle
le potentiel (62) est une différence de pression dans un fluide de travail, et les lignes de sortie (64) sont équipées d'un adaptateur pour immobiliser des conduites hydrauliques ou des conduites à air comprimé.

8. Unité d'entraînement (2) selon l'une des revendications précédentes, dans laquelle
l'unité de commande (8) comprend une télécommande (92) qui permet la manœuvre d'un véhicule utilitaire avec une distance de sécurité.

9. Unité d'entraînement (2) selon l'une des revendications précédentes, dans laquelle
il est prévu une cinquième ligne de sortie (64) pour collecter du fluide de fuite.

10. Unité d'entraînement (2) selon l'une des revendications précédentes, dans laquelle
le boîtier (22) comprend une multitude de moyens de fixation (24) qui sont disposés sur différents côtés du boîtier.

11. Véhicule utilitaire (10), comportant une unité d'entraînement (2) et deux entraînements auxiliaires (8) selon l'une des revendications 1 à 10,
dans lequel
chacun des entraînements auxiliaires (8) est immobilisé directement sur une roue du véhicule utilitaire (10) et est conçu pour transmettre un couple de rotation à la roue,
le véhicule utilitaire comprend une portion de fixation (14) dans laquelle peut s'engager un moyen de fixation (24) de l'unité d'entraînement (2) pour immobiliser l'unité d'entraînement (2) sur le véhicule utilitaire (10).

12. Véhicule utilitaire (10) selon la revendication 11,
dans lequel
il est prévu un système de lignes pour transmettre un potentiel, généré par l'unité d'entraînement (2), à l'entraînement auxiliaire (8), et
le système de lignes est de préférence immobilisé sur le véhicule utilitaire (10).
